(19) **Europäisches Patentamt European Patent Office Office européen des brevets**

(11) **EP 3 126 659 B1**

(12) **FASCICULE DE BREVET EUROPEEN**

(45) Date de publication et mention de la délivrance du brevet:
**11.12.2019 Bulletin 2019/50**

(21) Numéro de dépôt: **15718541.4**

(22) Date de dépôt: **02.04.2015**

(51) Int Cl.:
*F02K 9/00* (2006.01)    *F02K 9/56* (2006.01)
*F02K 9/96* (2006.01)    *G05B 23/02* (2006.01)

(86) Numéro de dépôt international:
**PCT/FR2015/050858**

(87) Numéro de publication internationale:
**WO 2015/150706 (08.10.2015 Gazette 2015/40)**

(54) **PROCÉDÉ ET DISPOSITIF DE SURVEILLANCE D'UN PARAMÈTRE D'UN MOTEUR DE FUSÉE**

VERFAHREN UND SYSTEM ZUR ÜBERWACHUNG EINES PARAMETERS EINES RAKETENMOTORS

METHOD AND DEVICE FOR MONITORING A PARAMETER OF A ROCKET ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.04.2014 FR 1452954**

(43) Date de publication de la demande:
**08.02.2017 Bulletin 2017/06**

(73) Titulaire: **SAFRAN AIRCRAFT ENGINES 75015 Paris (FR)**

(72) Inventeurs:
• **ROMET, Antoine**
**27460 Igoville (FR)**
• **LE GONIDEC, Serge**
**27200 Vernon (FR)**
• **MALIKOV, Dimitri**
**27200 Vernon (FR)**
• **GAZAGNES, Jonathan**
**63830 Durtol (FR)**

(74) Mandataire: **Cabinet Beau de Loménie 158, rue de l'Université 75340 Paris Cedex 07 (FR)**

(56) Documents cités:
EP-A1- 1 496 414    EP-A1- 2 592 253
WO-A2-2012/156615    FR-A1- 2 965 305
US-A1- 2005 222 747

EP 3 126 659 B1

## Description

Arrière-plan de l'invention

L'invention se rapporte au domaine général de l'aéronautique.

Elle concerne plus particulièrement la surveillance d'un moteur de fusée.

De façon connue, les systèmes de moteurs de fusée sont amenés à opérer sur un domaine de fonctionnement élargi, et sont équipés de moyens de vérification de leur bon fonctionnement.

La vérification mise en œuvre est réalisée d'une part en temps réel, en s'assurant que les paramètres de fonctionnement du moteur (ex. pression et température du moteur, etc.) restent dans des limites acceptables prédéfinies, et d'autre part en temps différé, en comparant des mesures des paramètres de fonctionnement réalisées lors d'essais sur le moteur par rapport à des gabarits de surveillance rectilignes prédéterminés, une sortie d'un gabarit révélant un défaut de mesure ou du moteur.

Le paramétrage (i.e. la détermination) des limites et des gabarits de surveillance se fait de manière manuelle et présente un risque d'erreur notamment lorsque ce paramétrage n'est pas en adéquation avec le point de fonctionnement du moteur. En outre, un changement du profil et des conditions d'essai du moteur amène une mise à jour fastidieuse et non sans risque des limites et des gabarits de surveillance. Des procédés de surveillance selon l'art antérieur sont connus de FR 2 965 305 et US 2005/0222747 A1.

Objet et résumé de l'invention

L'invention permet de pallier ces inconvénients en proposant un procédé de surveillance d'un paramètre d'un moteur de fusée selon les étapes définies dans la revendication 1, le procédé comprenant :

- une étape d'obtention d'une mesure du paramètre surveillé réalisée par un capteur et correspondant à un point de fonctionnement du moteur, ce point de fonctionnement étant défini par au moins un paramètre de régulation du moteur ;
- une étape d'estimation d'une valeur du paramètre surveillé pour ce point de fonctionnement, à partir d'une valeur régulée ou d'une valeur de consigne filtrée dudit au moins un paramètre de régulation du moteur définissant le point de fonctionnement ;
- une étape de comparaison d'une erreur entre la mesure du paramètre surveillé et son estimation par rapport à au moins un seuil déterminé à partir d'une incertitude sur cette erreur évaluée pour le point de fonctionnement ; et
- une étape d'émission d'une notification en cas de franchissement dudit au moins un seuil.

Corrélativement, l'invention vise aussi un dispositif de surveillance d'un paramètre d'un moteur de fusée selon la revendication 12, le dispositif comprenant :

- un module d'obtention d'une mesure du paramètre surveillé réalisée par un capteur et correspondant à un point de fonctionnement du moteur, ce point de fonctionnement étant défini par au moins un paramètre de régulation du moteur ;
- un module d'estimation d'une valeur du paramètre surveillé pour ce point de fonctionnement, à partir d'une valeur régulée ou d'une valeur de consigne filtrée dudit au moins un paramètre de régulation du moteur définissant le point de fonctionnement ;
- un module de comparaison d'une erreur entre la mesure du paramètre surveillé et son estimation par rapport à au moins un seuil déterminé à partir d'une incertitude sur cette erreur évaluée pour le point de fonctionnement ; et
- un module d'émission d'une notification en cas de franchissement dudit au moins un seuil.

Par franchissement du seuil par l'erreur, on entend que l'erreur est supérieure au seuil si celui-ci définit une limite haute à ne pas dépasser, ou que l'erreur est inférieure au seuil si ce dernier définit une limite basse à ne pas dépasser.

En outre, il convient de noter que l'étape de comparaison de l'erreur peut être mise en œuvre dans le cadre de l'invention de différentes manières, de façon évidente pour l'homme du métier. Ainsi par exemple, l'erreur peut être définie comme la valeur absolue de la différence entre la mesure du paramètre surveillé et son estimation, ou simplement comme la différence entre la mesure du paramètre surveillé et son estimation. De plus, au cours de cette étape, l'erreur peut être estimée puis comparée au seuil, ou en variante, la mesure du paramètre surveillé peut être comparée à son estimation à laquelle a été ajouté (ou éventuellement soustrait) le seuil, etc. Cette étape de comparaison est équivalente quelle que soit la façon dont elle est mise en œuvre à une comparaison de la mesure du paramètre surveillé à un gabarit défini à partir de l'estimation du paramètre surveillé et du seuil.

L'invention propose ainsi une surveillance des paramètres d'un moteur de fusée qui évolue dynamiquement et automatiquement avec le point de fonctionnement de ce moteur. Les paramètres surveillés sont par exemple :

- une pression du moteur ; et/ou
- une température du moteur ; et/ou
- une vitesse de rotation d'un élément du moteur ; et/ou
- un débit d'un fluide circulant dans le moteur ; et/ou
- un comportement vibratoire du moteur.

Le point de fonctionnement du moteur est défini à partir d'un ou de plusieurs paramètres utilisés pour la régulation du moteur. De tels paramètres de régulation sont par exemple une pression d'une chambre de combustion du moteur, un rapport de mélange (oxygène/hydrogène) en entrée d'une pompe du moteur, une vitesse de rotation d'une turbopompe à oxygène, une vitesse de rotation d'une turbopompe à hydrogène, etc. Ces paramètres de régulation sont régulés (i.e. contrôlés) en boucle fermée lors du fonctionnement du moteur, de façon connue en soi, par un système de régulation apte à agir sur diverses géométries variables du moteur comme par exemple sur la position de vannes de régulation telles que des vannes VBPO (Vanne de ByPass Oxygène) et VBPH (Vanne de ByPass Hydrogène).

La surveillance proposée par l'invention s'adapte avantageusement au caractère dynamique et non linéaire des systèmes de moteur de fusée, ce caractère étant lié notamment à la variation en fonction du temps des consignes de régulation du moteur, ces consignes étant bornées en valeurs et en gradient par le système de régulation. A cet effet, elle s'appuie sur une estimation du ou des paramètres surveillés (ex. par simulation ou à l'aide de modèles) à partir d'une valeur régulée et donc validée des paramètres de régulation, de sorte à limiter les incertitudes liées en particulier aux vannes et à détecter des anomalies affectant le moteur uniquement, ou d'une valeur de consigne filtrée des paramètres de régulation de sorte à détecter des anomalies affectant toute la chaîne en aval de la boucle de régulation, c'est-à-dire affectant non seulement le moteur mais également les actionneurs permettant de commander les géométries variables du moteur. L'estimation ainsi obtenue est ensuite comparée à une mesure du paramètre surveillé en tenant compte d'un seuil déterminé de façon automatique en fonction du point de fonctionnement du moteur. Le seuil est déterminé à partir notamment des incertitudes de mesure et d'estimation du paramètre à surveiller rencontrées au point de fonctionnement.

Ainsi, l'invention ne repose pas, contrairement à l'état de la technique, sur un gabarit de surveillance préétabli ou des limites préétablies au(x)quel(les) on compare une mesure du paramètre à surveiller. Elle définit au contraire de façon automatique et dynamique les limites et/ou le gabarit de surveillance du moteur de fusée à partir d'une estimation des paramètres à surveiller et d'une précision de mesure et d'estimation (écart-type), évaluées toutes deux en tenant compte du point de fonctionnement du moteur.

Dans un mode particulier de réalisation, le point de fonctionnement utilisé pour évaluer l'incertitude sur l'erreur est déterminé à partir de la valeur régulée dudit au moins un paramètre de régulation.

Ce mode de réalisation s'appuie sur une estimation précise du point de fonctionnement. Il permet de surveiller le moteur de fusée aussi bien en régime stabilisé qu'en régime transitoire. En effet, il permet de s'affranchir, en régime transitoire, des retards parfois non négligeables pouvant être rencontrés entre les mesures des paramètres de régulation et les valeurs de consignes de ces paramètres lors de la régulation.

En variante, le point de fonctionnement utilisé pour évaluer l'incertitude sur l'erreur peut être déterminé à partir de la valeur de consigne filtrée dudit au moins un paramètre de régulation ou de la valeur de consigne dudit au moins un paramètre de régulation (cette dernière étant en avance sur le point de fonctionnement réel du moteur).

Il convient de noter que plusieurs seuils peuvent être pris en compte lors de la surveillance (par exemple si σ désigne l'incertitude sur l'erreur en fonction du point de fonctionnement du moteur, des seuils hauts et bas à +/-3σ et à +/-6σ peuvent être considérés), chaque seuil pouvant être associé à une réponse à la notification émise distincte et appropriée en fonction de la gravité de l'anomalie détectée (ex. levée d'une alerte, action de maintenance sur le moteur, arrêt du moteur, etc.).

La surveillance ainsi offerte par l'invention permet ainsi une détection d'anomalies affectant le moteur de fusée en temps réel comme en temps différé. Le dispositif de surveillance peut par conséquent être hébergé sur la même entité que le dispositif de régulation du moteur (ex. sur un calculateur au plus proche du moteur), ou sur une entité distincte, à bord de la fusée propulsée par le moteur (ex. porté par l'ordinateur de vol) ou encore sur un banc d'essai de moteur de fusée.

Dans un mode privilégié de réalisation, l'étape d'estimation de la valeur du paramètre surveillé est réalisée à l'aide d'un réseau de neurones artificiel ayant comme entrée(s) la valeur régulée ou la valeur de consigne filtrée dudit au moins un paramètre de régulation du moteur.

L'utilisation d'un réseau de neurones permet de reproduire plus facilement les comportements non linéaires du système de moteur de fusée et ce, quelle que soit l'allure de ces comportements non linéaires et la complexité du système.

En outre, le recours à un réseau de neurones artificiel permet d'atteindre un compromis précision d'estimation versus charge de calcul qui permet une application en temps réel de l'invention. Le nombre de calculs nécessaires pour estimer la valeur du paramètre à surveiller est en effet limité via l'utilisation d'un tel modèle.

Dans ce mode de réalisation, l'incertitude sur l'erreur peut tenir compte notamment d'une incertitude d'estimation du paramètre surveillé déterminée en fonction :

- d'une incertitude sur l'entrée du réseau de neurones ; et/ou
- d'une incertitude sur le réseau de neurones ; et/ou
- d'une incertitude sur une base d'apprentissage utilisée pour construire le réseau de neurones.

En variante, d'autres estimateurs qu'un réseau de neurones artificiel peuvent être utilisés, comme par exemple un estimateur non linéaire établi hors ligne et basé sur une régression non linéaire, etc.

Les inventeurs ont constaté qu'en présence de variations brusques des valeurs de consignes d'un paramètre de régulation, l'erreur entre la mesure du paramètre surveillé et son estimation peut se rapprocher très près du seuil déterminé conformément à l'invention, en fonction du point de fonctionnement. Pour rendre plus robuste le procédé de surveillance à ce type de phénomène, on peut, dans un mode particulier de réalisation de l'invention, tenir compte en outre, lors de l'étape de comparaison, de la dynamique de changement du point de fonctionnement du moteur, de sorte notamment à définir un gabarit plus large autour de la mesure du paramètre surveillé en cas de transitions brusques du point de fonctionnement du moteur.

Ce gabarit peut être défini par exemple :

- par une borne supérieure obtenue en multipliant l'estimation du paramètre surveillé par la réponse indicielle d'un filtre d'ordre 2 prédéfini modélisant les brusques variations de la valeur de consigne ou de la valeur de consigne filtrée du ou des paramètres de régulation, et en ajoutant au résultat de cette opération l'incertitude précédemment déterminée ; et/ou
- par une borne inférieure obtenue en multipliant l'estimation du paramètre surveillé par la réponse indicielle d'un filtre d'ordre 1 prédéfini modélisant les variations douces de la valeur de consigne ou de la valeur de consigne filtrée du ou des paramètres de régulation, et en retranchant au résultat de cette opération l'incertitude précédemment déterminée.

Autrement dit, de façon équivalente, on compare :

- à un premier seuil dit haut, l'erreur entre la mesure du paramètre surveillé et son estimation pondérée par la réponse d'un filtre d'ordre 2 prédéfini à un échelon représentatif de la valeur de consigne ou de la valeur de consigne filtrée dudit au moins un paramètre de régulation ; et
- à un second seuil dit bas, l'erreur entre la mesure du paramètre surveillé et son estimation pondérée par la réponse d'un filtre d'ordre 1 prédéfini audit échelon un franchissement de l'un ou l'autre des seuils résultant en l'émission d'une notification de franchissement d'un seuil.

Dans un mode particulier de réalisation, les différentes étapes du procédé de surveillance sont déterminées par des instructions de programmes d'ordinateurs.

En conséquence, l'invention vise aussi un programme d'ordinateur sur un support d'informations, ce programme étant susceptible d'être mis en œuvre dans un dispositif de surveillance ou plus généralement dans un ordinateur ou dans un calculateur, ce programme comportant des instructions adaptées à la mise en œuvre des étapes d'un procédé de surveillance tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un moteur de fusée comprenant un dispositif de surveillance selon l'invention.

On peut également envisager, dans d'autres modes de réalisation, que le procédé de surveillance, le dispositif de surveillance et le moteur de fusée selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- la figure 1 représente schématiquement un moteur de fusée comprenant un dispositif de surveillance conforme à l'invention, dans un mode particulier de réalisation ;
- la figure 2 représente schématiquement l'architecture matérielle du dispositif de surveillance de la figure 1 ;
- la figure 3 représente sous forme d'ordinogramme, les principales étapes d'un procédé de surveillance selon l'invention, telles que mises en œuvre par le dispositif de surveillance de la figure 1 ;
- la figure 4 représente un réseau de neurones artificiel utilisé par le dispositif de surveillance de la figure 1 ;

- la figure 5 représente un exemple de table de valeurs pouvant être utilisée lors du procédé de surveillance représenté à la figure 3 ;
- la figure 6 illustre un exemple de variations de la mesure et de l'estimation d'une pression PSPO du système surveillé par le dispositif de surveillance de la figure 1 ; et
- la figure 7 illustre l'évolution en fonction du temps des seuils considérés par le dispositif de surveillance, dans un second mode de réalisation de l'invention.

Description détaillée de l'invention

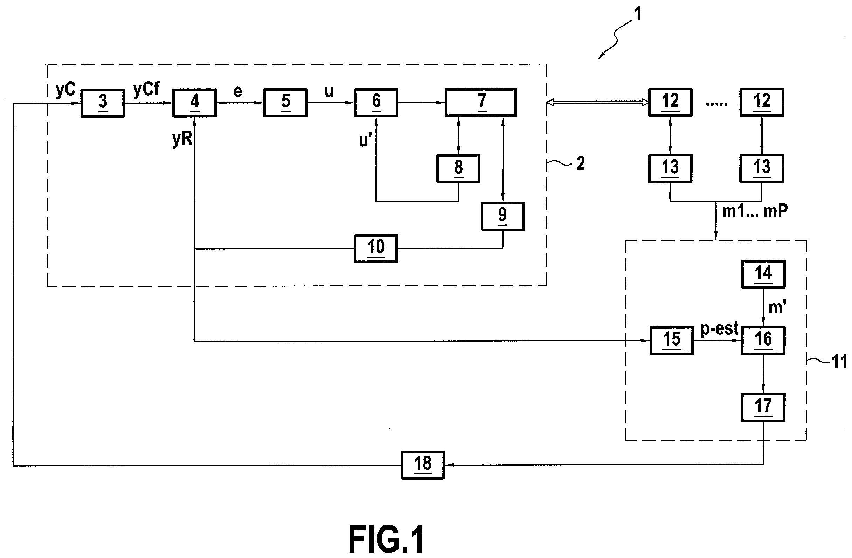

La **figure 1** représente schématiquement, dans son environnement, un moteur de fusée 1 dont on envisage la surveillance conformément à l'invention, dans un mode particulier de réalisation.

De façon connue en soi, un moteur de fusée utilise de l'hydrogène et de l'oxygène liquides, qui sont brûlés lors du fonctionnement du moteur dans une chambre de combustion. Dans l'exemple considéré, l'apport en hydrogène et en oxygène est contrôlé par le biais de vannes de régulation qui alimentent des turbopompes.

Les vannes de régulation permettent de contrôler notamment les débits d'oxygène et d'hydrogène, les vitesses des turbines, etc. Elles sont commandées par des actionneurs et leurs positions sont pilotées par un calculateur, par exemple par le calculateur ou le contrôleur du moteur de fusée. A cet effet, le calculateur s'appuie sur différents paramètres de régulation du moteur, tels que par exemple la pression dans la chambre de combustion notée PGC, le rapport de mélange oxygène/hydrogène en entrée de pompe notée RMEP, les vitesses de rotation des turbopompes à oxygène et hydrogène, etc.

Le principe de fonctionnement du système de régulation 2 ainsi mis en œuvre est illustré schématiquement à la figure 1. Il convient de noter que dans l'exemple envisagé à la figure 1, on suppose que la logique de régulation est mise en œuvre par le calculateur du moteur de fusée 1. Toutefois cette hypothèse n'est pas limitative, et cette logique de régulation peut être mise en œuvre par un autre calculateur embarqué à bord de la fusée tel que par exemple l'ordinateur de bord pilotant la fusée (aussi connu sous le nom de OBC pour « On Board Computer » en anglais).

Le système de régulation 2 fonctionne en boucle fermée. Plus spécifiquement, une consigne yC est créée par le calculateur pour chaque paramètre de régulation du moteur de façon connue en soi, et fournie à un filtre 3 de dynamique de poursuite. La consigne filtrée yCf obtenue en sortie du filtre 3 alimente un module 4 de calcul d'erreur auquel est également fournie la valeur régulée yR du paramètre de régulation. L'erreur e évaluée par le module 4 est fournie à un module correcteur 5 du moteur de fusée, qui évalue une commande u visant à corriger l'erreur e (i.e. à la faire disparaître). La commande u est une commande de position d'une vanne de régulation destinée à permettre de réajuster la valeur du paramètre de régulation pour qu'il soit conforme à la consigne. La commande u est transmise à un module correcteur 6 pilotant l'actionneur 7 de la vanne de régulation en fonction de la commande u. Un capteur 8 de position de la vanne de régulation ainsi pilotée remonte au module correcteur 6 une mesure u' de la position de la vanne de régulation.

Le moteur de fusée 1 est par ailleurs équipé d'un capteur 9 permettant de mesurer la valeur « régulée » du paramètre de régulation ou de l'estimer à partir de la position u' mesurée de la vanne par le capteur 8. Ce capteur 9 est par exemple un capteur de pression, un capteur de vitesse, un capteur de position, un débitmètre, etc., selon le paramètre de régulation considéré. La valeur régulée, après avoir été validée par un module 10 de validation du calculateur (apte notamment à éliminer les valeurs aberrantes), est fournie au module 4 de calcul d'erreur pour adapter la commande u en vue d'atteindre la consigne yC, etc. Le fonctionnement du système de régulation 2 étant connu de l'homme du métier, il n'est pas décrit plus davantage ici.

Le bon fonctionnement du moteur de fusée 1 est assuré grâce à un dispositif de surveillance 11 conforme à l'invention. Ce dispositif de surveillance 11 est configuré pour surveiller un ou plusieurs organes ou éléments 12 du moteur de fusée 1 à partir de mesures m1,...,mP fournies par des capteurs 13, connus en soi, et aptes à mesurer divers paramètres p1,...,pP du moteur à divers points de fonctionnement de ce dernier, P désignant un entier quelconque supérieur ou égal à 1. Ces paramètres surveillés par le dispositif de surveillance 11 sont par exemple :

- la pression en sortie des pompes du moteur ;
- la température de la tuyère ;
- les vitesses de rotation des turbopompes ;
- les débits de fluides (oxygène, hydrogène) en entrée des pompes du moteur ;
- un comportement vibratoire du moteur ;
- etc.

Par souci de simplification dans la suite de la description, on considère un seul paramètre noté p surveillé par le dispositif de surveillance 11 (i.e. P=1), par exemple la pression en sortie de la pompe à oxygène du moteur 1 notée PSPO (pour Pression Sortie Pompe Oxygène). Toutefois, aucune limitation n'est attachée au nombre P de paramètres du moteur surveillés par le dispositif de surveillance 11 ni à la nature de ces paramètres.

Chaque point de fonctionnement considéré du moteur de fusée 1 est défini par la valeur d'un ou de plusieurs paramètres de régulation utilisés par le système de régulation 2, comme mentionné précédemment.

Dans l'exemple envisagé ici, chaque point de fonctionnement considéré du moteur est défini par un couple de paramètres de régulation, à savoir le couple formé de la valeur de la pression de la chambre de combustion PGC et de la valeur du rapport de mélange oxygène/hydrogène en entrée de pompes RMEP.

Toutefois cette hypothèse n'est pas limitative en soi et d'autres paramètres de régulation, en plus des paramètres de régulation précités ou en remplacement de ceux-ci, peuvent être envisagés pour définir le point de fonctionnement du moteur de fusée 1, comme par exemple la vitesse de rotation des turbopompes à oxygène et hydrogène. Il est même possible de n'envisager qu'un paramètre de régulation unique.

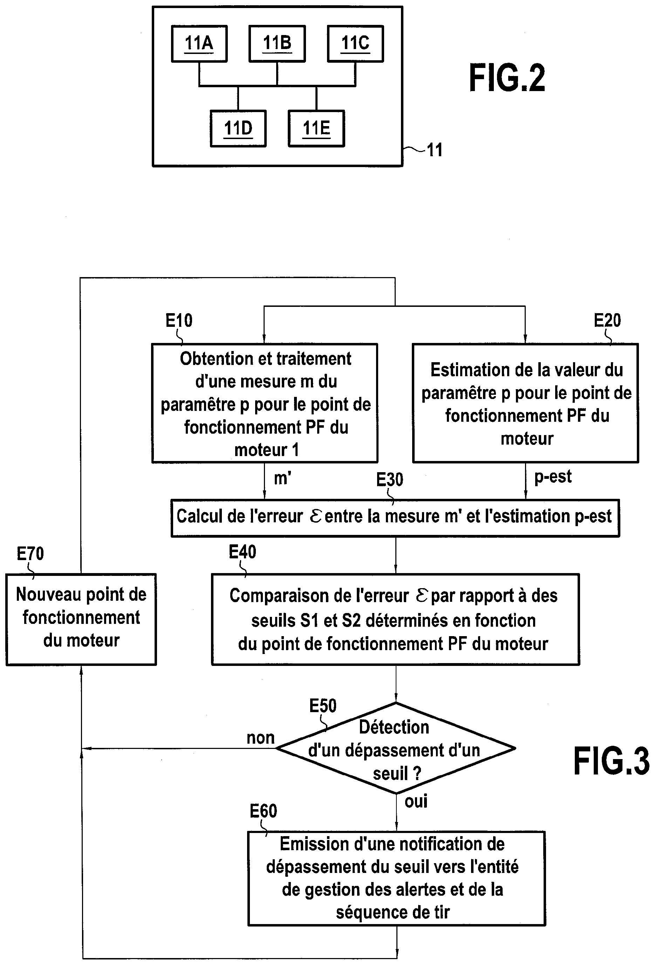

Dans le mode de réalisation décrit ici, le dispositif de surveillance 11 est intégré dans le moteur de fusée 1, et plus précisément dans son calculateur ou contrôleur, permettant ainsi de mettre en oeuvre aisément une surveillance en temps réel et en vol du moteur de fusée 1. Il s'appuie sur l'architecture matérielle du calculateur qui, dans le mode de réalisation décrit ici, est celle d'un ordinateur, comme illustré schématiquement à la **figure 2.**

Ainsi, le dispositif de surveillance 11 comprend notamment un processeur 11A, une mémoire morte 11B, une mémoire vive 11C, une mémoire non volatile 11D et des moyens de communication 11E avec différents éléments du calculateur et du moteur de fusée 1 comme notamment les capteurs 13 et le système de régulation 2. Ces moyens de communication 11E comprennent par exemple des bus de données.

La mémoire morte 11B du dispositif de surveillance 11 constitue un support d'enregistrement lisible par le processeur 11A et sur lequel est enregistré un programme d'ordinateur conforme à l'invention, comportant des instructions pour l'exécution des étapes d'un procédé de surveillance selon l'invention, les étapes de ce procédé étant décrites ultérieurement en référence aux figures 3 à 5 dans un mode particulier de réalisation.

Ce programme d'ordinateur définit de façon équivalente des modules fonctionnels du dispositif de surveillance 11 (modules logiciels ici) tels qu'un module d'obtention 14 de mesures des paramètres surveillés, un module d'estimation 15 de valeurs de ces paramètres, un module de comparaison 16 des mesures et des valeurs estimées et un module d'émission 17 d'une notification de franchissement de seuil activé le cas échéant. Les fonctions de ces divers modules sont décrites plus en détail en référence aux étapes du procédé de surveillance.

Dans un autre mode de réalisation, le dispositif de surveillance 11 est hébergé dans un banc d'essai du moteur de fusée, ou dans l'ordinateur de bord de la fusée (dans l'OBC mentionné précédemment). Aucune limitation n'est attachée à l'entité hébergeant le dispositif de surveillance 11. En particulier, le système de régulation 2 et le dispositif de surveillance 11 peuvent être hébergés par des entités distinctes.

Nous allons maintenant, en référence à la **figure 3**, décrire les principales étapes du procédé de surveillance mis en œuvre par le dispositif de surveillance 11 dans un mode particulier de réalisation de l'invention.

Comme mentionné précédemment, le dispositif de surveillance 11 met en œuvre une surveillance du moteur de fusée 1 à partir de mesures du paramètre p collectées par un des capteurs 13 équipant le moteur, pour différents points de fonctionnement de ce dernier. Une telle mesure m du paramètre p (ou plus généralement m1,..., mP des paramètres p1,...,pP lorsque P paramètres sont surveillés conformément à l'invention) est obtenue du capteur 13 par le module d'obtention 14 du dispositif de surveillance 11 via les moyens de communications 11E du dispositif de surveillance, pour un point de fonctionnement PF du moteur de fusée 1 (étape E10).

Dans le mode de réalisation décrit ici, le module d'obtention 14 est apte à traiter les mesures reçues du capteur 13, et plus spécifiquement à les filtrer et à éliminer les valeurs aberrantes le cas échéant. De tels traitements sont classiquement utilisés et ne sont pas décrits plus en détail ici. Ils permettent de s'affranchir notamment de problèmes métrologiques.

La mesure m' du paramètre p résultant du traitement de la mesure m est stockée par le module d'obtention 14 dans la mémoire vive 11C du dispositif de surveillance 11.

Par ailleurs (en parallèle ou après l'étape E10), le module d'estimation 15 du dispositif de surveillance 11 estime la valeur du paramètre surveillé p pour le point de fonctionnement PF (étape E20). Il utilise à cet effet un estimateur construit à partir d'une base de données d'apprentissage et modélisant le comportement non linéaire du moteur de fusée 11. Cet estimateur prend en entrée la valeur du point de fonctionnement PF, et délivre en sortie une estimation p_est du paramètre p pour cette valeur de point de fonctionnement PF. Dans le mode de réalisation décrit ici, le point de fonctionnement PF fourni en entrée de l'estimateur est défini par les valeurs régulées yR des paramètres de régulation PGC et RMEP.

Dans un autre mode de réalisation, le point de fonctionnement PF fourni en entrée de l'estimateur est défini par les valeurs de consigne filtrées yCf des paramètres de régulation.

La base de données d'apprentissage utilisée pour construire l'estimateur est issue ici d'un modèle mathématique consolidé avec des données expérimentales. L'obtention d'une telle base d'apprentissage ne présente pas de difficulté pour l'homme du métier et n'est pas décrite davantage ici.

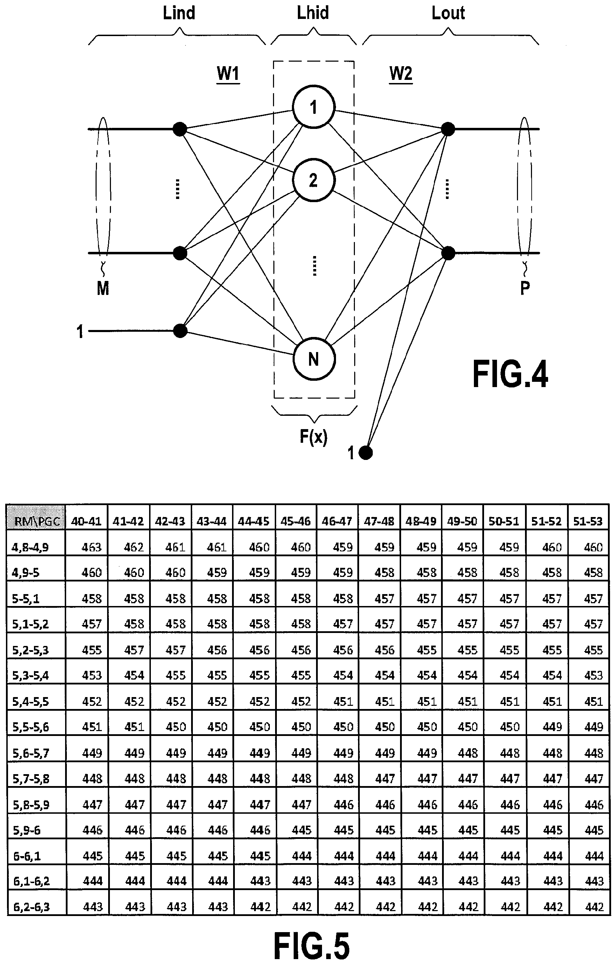

Dans le mode de réalisation décrit ici, l'estimateur utilisé par le module d'estimation 15 est un réseau de neurones artificiel RNA construit à partir de la base de données d'apprentissage. Ce réseau de neurones est représenté à la **figure 4.**

Plus précisément ici, le réseau de neurones RNA considéré est un réseau de type PMC (Perceptron Multi Couches) sans rétroaction, comprenant une couche d'entrée Lin, une couche de sortie Lout, et une ou plusieurs couches successives intermédiaires dites cachées Lhid. Par souci de simplification, une seule couche cachée est représentée à la figure 4.

La couche d'entrée Lin comprend M+1 entrées (ou neurones) formant un vecteur [Vin,1], Vin désignant un vecteur de dimension M comprenant les M paramètres de régulation définissant le point de fonctionnement considéré du moteur de fusée. M est un entier supérieur ou égal à 1. Dans l'exemple envisagé, la couche d'entrée Lin comprend donc, en plus de l'entrée unitaire, M=2 entrées correspondant respectivement à la pression PGC de la chambre de combustion et au rapport RMEP de mélange en entrée de la pompe du moteur.

La couche de sortie Lout du réseau comprend P sorties (ou neurones) formant un vecteur Vout correspondant respectivement aux estimations des P paramètres surveillés par le dispositif de surveillance 11. P est un entier supérieur ou égal à 1. Dans l'exemple envisagé ici, P=1.

La couche cachée Lhid comprend N neurones, où N désigne un entier supérieur ou égal à 1. Elle s'appuie ici sur une fonction de type sigmoïdale F(x) à sortie vectorielle réelle à N dimensions, définie par :

$$F(x) = \frac{2}{1+e^{-2x}} - 1$$

En variante, d'autres fonctions de type sigmoïdales peuvent être envisagées.

Ainsi, le vecteur de sortie Vout du réseau de neurones est calculé selon :

$$\text{Vout} = W2.\begin{bmatrix} F\left(W1.\begin{bmatrix} \text{Vin} \\ 1 \end{bmatrix}\right) \\ 1 \end{bmatrix}$$

où W1 désigne la matrice des poids synaptiques entre la couche d'entrée Lin et la couche cachée Lhid, la dernière colonne de cette matrice représentant les biais des neurones de la couche cachée, et W2 désigne la matrice des poids synaptiques entre la couche cachée Lhid et la couche de sortie Lout, la dernière colonne de cette matrice représentant les biais des neurones de la couche de sortie.

Les poids synaptiques et les biais contenus dans les matrices W1 et W2 sont obtenus pour le moteur de fusée 1 à l'aide d'un algorithme d'apprentissage automatique basé sur la méthode des gradients conjugués et appliqué à la base de données d'apprentissage, connu de l'homme du métier et non décrit ici. En variante, d'autres algorithmes d'apprentissage connus peuvent être mis en œuvre pour construire le réseau de neurones RNA à partir d'une base de données d'apprentissage.

Dans l'exemple envisagé à la figure 4, une seule couche cachée Lhid est représentée avec N neurones. Les nombres de couches cachées et de neurones par couche cachée peuvent être optimisés pour atteindre un réseau d'une précision donnée, cette précision pouvant être mesurée par exemple au moyen d'un critère d'erreur moyenne quadratique. En variante, d'autres critères peuvent être pris en compte également, tels que par exemple le temps de calcul nécessaire pour estimer un paramètre à l'aide du réseau de neurones, etc., éventuellement pondérés en fonction de leur importance relative.

En outre, d'autres architectures de réseaux de neurones peuvent être envisagées telles que par exemple des architectures avec rétroaction.

En variante, d'autres modèles non linéaires qu'un réseau de neurones artificiel peuvent être utilisés pour estimer la valeur du paramètre surveillé p, comme par exemple un modèle non linéaire construit hors ligne utilisant une régression non linéaire défini à partir de relations structurelles existant entre les paramètres de régulation et les paramètres surveillés. De telles relations structurelles sont connues en soi ou peuvent être déterminées par expérience et/ou à partir de la base de données d'apprentissage.

En référence à la figure 3, la mesure m' et l'estimation p_est du paramètre p sont fournies respectivement par le module d'obtention 14 et par le module d'estimation 15 au module 16 de comparaison du dispositif de surveillance 11.

Sur réception de ces valeurs, le module de comparaison 16 évalue ici dans un premier temps l'erreur ε entre la mesure m' et l'estimation p_est du paramètre p surveillé (étape E30) selon :

$$\varepsilon = |m' - p\_est|$$

où |m' - p_est| désigne la valeur absolue de la différence entre la mesure m' et l'estimation p_est.

Puis il compare l'erreur ε à un ou plusieurs seuils S1,...,SK, K désignant un entier supérieur ou égal à 1 (étape E40).

Conformément à l'invention, les seuils S1,...,SK sont déterminés par le module de comparaison 16 du dispositif de surveillance 11 à partir d'une incertitude σ (i.e. écart-type) sur l'erreur ε évaluée pour le point de fonctionnement PF considéré du moteur de fusée 1, c'est-à-dire pour le point de fonctionnement du moteur de fusée 1 auquel a été acquise la mesure m, et pour lequel a été estimé la valeur p_est. Par exemple, le dispositif de surveillance 11 considère deux seuils distincts S1=3σ et S2=6σ (ou de manière équivalente, si l'on considère l'erreur ε= m'- p_est, les seuils S1=+/-3σ et S2=+/-6σ).

Ces exemples ne sont donnés qu'à titre illustratif, et bien entendu d'autres multiples de l'incertitude σ peuvent être envisagés en fonction des anomalies que l'on souhaite détecter. Le choix des seuils est guidé par le souci de détecter les dérives des éléments du moteur de fusée 1 (incluant des capteurs utilisés) suffisamment tôt tout en limitant les fausses alarmes, comme détaillé davantage ultérieurement.

Dans le mode de réalisation décrit ici, l'incertitude σ tient compte de deux facteurs à savoir l'incertitude σ1 sur la mesure m du paramètre p et l'incertitude σ2 sur l'estimation p_est du paramètre p. Plus précisément :

$$\sigma = \sqrt{(\sigma1)^2 + (\sigma2)^2}$$

En variante, l'incertitude σ peut être déduite des incertitudes σ1 et σ2 en utilisant une autre fonction qu'une somme quadratique.

L'incertitude σ1 sur la mesure m du paramètre p est connue pour un capteur donné. Elle peut par exemple être extraite ou déterminée à partir des spécifications fournies par le fabricant du capteur 13 (et éventuellement validée par le biais de recettes de test effectuées sur le capteur). Il convient de noter que cette incertitude (ou de manière équivalente l'imprécision de mesure du capteur) n'est pas nécessairement constante sur toute la plage de fonctionnement du moteur de fusée 1 mais peut être amenée à varier en fonction du point de fonctionnement du moteur. Le dispositif de surveillance 11 utilise donc ici pour évaluer l'incertitude σ1, une table TAB1 de valeurs prédéterminée à partir des spécifications du fabricant du capteur 13 notamment, et donnant, pour différentes valeurs du couple (PGC,RMEP) définissant le point de fonctionnement PF, la valeur de l'incertitude σ1 résultante.

L'incertitude σ2 sur l'estimation p_est du paramètre p dépend ici de plusieurs sources d'incertitude, dont notamment :

- l'incertitude (ou de manière équivalente, à l'inverse, la précision) sur les données fournies en entrée de l'estimateur utilisé par le module d'estimation 15, et plus spécifiquement ici, des valeurs régulées des paramètres de régulation PGC et RMEP. En effet, la précision de la boucle fermée mise en oeuvre par le système de régulation 2 dépend de la mesure du ou des paramètres de régulation par le capteur 9 et de la largeur de la zone dans laquelle l'erreur entre la consigne filtrée yCf et la mesure yR est forcée à zéro pour éviter des instabilités non-linéaires (cycle limite) au niveau des actionneurs 7 (liés à la limite de leur résolution) ;
- l'incertitude (ou de manière équivalente, à l'inverse, la précision) sur l'estimateur utilisé, à savoir ici du réseau de neurones artificiel RNA, qui n'est pas identiquement nulle mais dépend du point de fonctionnement du moteur. La précision de l'estimateur caractérise sa capacité à reconstruire fidèlement la base de données d'apprentissage dont il est issu ; et
- l'incertitude (ou de manière équivalente, à l'inverse, la précision) sur la base de données d'apprentissage utilisée pour construire l'estimateur, c'est-à-dire ici le réseau de neurones artificiel RNA. L'estimateur peut avoir une excellente précision et pour autant la valeur du paramètre estimé à l'aide de cet estimateur peut être éloignée de la mesure de ce paramètre si la base d'apprentissage n'est pas fiable, par exemple lorsque cette base d'apprentissage est issue elle-même d'un modèle mathématique. Un biais peut être alors appliqué lors de la construction de l'estimateur pour prendre en compte la différence entre le vrai moteur et sa modélisation par la base d'apprentissage afin de limiter cette incertitude.

Dans le mode de réalisation décrit ici, le dispositif de surveillance 11 utilise pour évaluer l'incertitude σ2 résultant de la combinaison des incertitudes précitées, une table TAB2 de valeurs déterminée, par exemple, par simulation à l'aide d'une méthode Monte Carlo classique connue de l'homme du métier.

La **figure 5** représente un exemple d'une telle table de valeurs TAB2. Cet exemple est donné à titre illustratif uniquement.

La table TAB2 donne pour différentes valeurs du couple de paramètres de régulation (PGC,RMEP), la valeur de l'incertitude σ2 résultante (dans l'unité du paramètre p surveillé, c'est-à-dire dans l'exemple envisagé ici en bar, le paramètre surveillé étant une pression). Dans l'exemple illustré à la figure 5, le domaine des valeurs des paramètres de régulation PGC et RMEP a été divisé de manière arbitraire en 195 sous-domaines (ces domaines ne sont pas tous représentés par souci de simplification) dans chacun desquels des tirages ont été effectués conformément à la méthode Monte Carlo. Le nombre de domaines considéré dépend d'un compromis entre complexité et homogénéité de la valeur de l'incertitude au sein d'un même domaine.

En variante, on peut envisager l'incertitude σ2 peut être évaluée à partir d'un réseau de neurones artificiel plutôt que d'utiliser une table telle que la table TAB2.

Le module de comparaison 16 du dispositif de surveillance extrait donc des tables de valeurs TAB1 et TAB2 précitées les incertitudes σ1 et σ2 correspondant au point de fonctionnement PF considéré du moteur de fusée 1. Il utilise à cet effet ici comme valeurs des paramètres de régulation PGC et RMEP définissant ce point de fonctionnement PF, les valeurs régulées et validées yR des paramètres de régulation PGC et RMEP.

Dans une variante de réalisation, le module de comparaison 16 utilise comme point de fonctionnement PF pour extraire les incertitudes σ1 et σ2 des tables TAB1 et TAB2 respectivement, les valeurs de consigne filtrées yCf de ces paramètres de régulation (i.e. disponibles en sortie du filtre 3 de dynamique de poursuite).

Dans une autre variante de réalisation encore, le module de comparaison 16 utilise comme point de fonctionnement PF pour extraire les incertitudes σ1 et σ2 des tables TAB1 et TAB2 respectivement, les valeurs de consigne yC fixées par le système de régulation 2 pour ces paramètres de régulation.

Puis il évalue à partir des incertitudes σ1 et σ2, la valeur de l'incertitude σ. Il déduit de cette valeur, les seuils S1 et S2. Par exemple ici, S1=3σ et S2=6σ.

Comme mentionné précédemment, le module de comparaison 16 compare l'erreur ε aux seuils ainsi déterminés (étapes E40).

En variante, il compare la mesure m' du paramètre surveillé p à p_est+/-3σ et à p_est+/-6σ.

S'il détermine lors de cette comparaison que l'erreur ε est supérieure au seuil S1 (réponse oui à l'étape test E50 et franchissement du seuil S1), une notification du franchissement (dépassement ici, l'erreur étant définie de sorte à être toujours positive) du seuil S1 est émise par le module de notification 17 du dispositif de surveillance 11 à destination d'une entité 18 de gestion des alertes et de la séquence de tir (étape E60).

De façon similaire, si le module de comparaison 16 détermine que l'erreur ε est supérieure au seuil S2 (réponse oui à l'étape test E50 et franchissement du seuil S2), une notification du franchissement du seuil S2 est émise par le module de notification 17 du dispositif de surveillance 11 à destination d'une entité 18 de gestion des alertes et de la séquence de tir (étape E60).

Dans le mode de réalisation décrit ici, l'entité 18 de gestion des alertes et de la séquence de tir met en œuvre une logique majoritaire pour déterminer l'action appropriée à prendre le cas échéant sur le moteur de fusée 1 en réponse aux notifications de dépassement de seuil reçues. Une réponse modulaire et graduelle en fonction du dépassement reporté peut être mise en œuvre (ex. maintenance à prévoir, arrêt du moteur, adaptation de la valeur de consigne yC, etc.).

Si aucun seuil n'est franchi (ou dépassé ici), la surveillance se poursuit conformément aux étapes E10 à E60 précédemment décrites pour un nouveau point de fonctionnement du moteur de fusée 1. Il en est de même après notification de l'entité 18 de gestion.

Dans le mode de réalisation décrit ici, les seuils considérés par le dispositif de surveillance sont fixés uniquement en fonction de l'incertitude σ (ex. égaux à des multiples de cette incertitude), qui dépend elle-même du point de fonctionnement PF considéré du moteur de fusée 1.

Dans un second mode de réalisation de l'invention, pour obtenir une surveillance plus robuste du moteur de fusée 1, le dispositif de surveillance 11 détermine les seuils utilisés lors de l'étape de comparaison à partir de l'incertitude σ et tient compte en outre de la dynamique de changement du point de fonctionnement du moteur et plus spécifiquement, des valeurs de consigne (brutes ou filtrées) des paramètres de régulation.

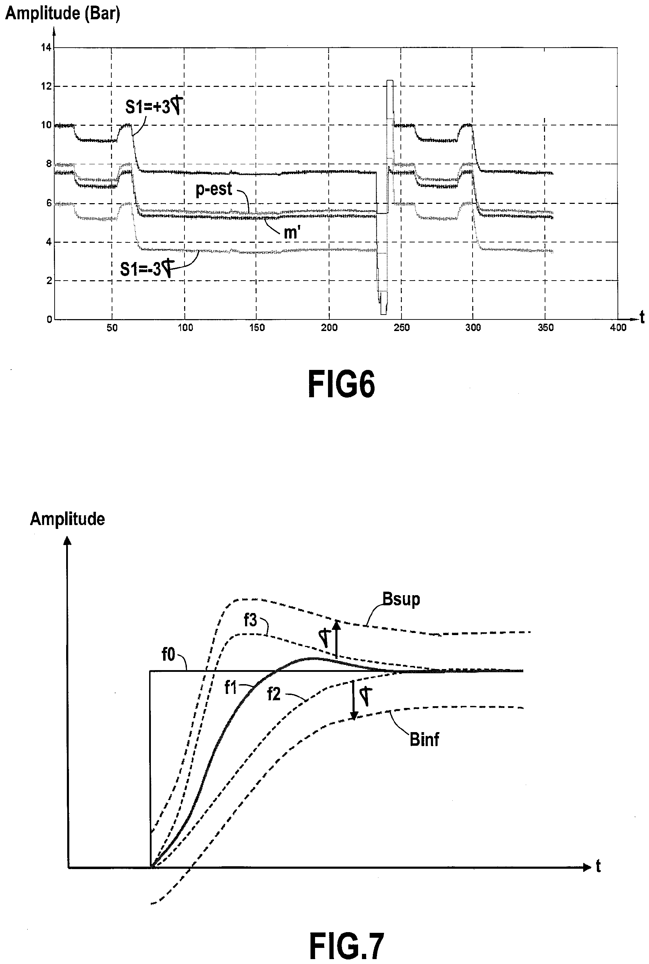

Les inventeurs ont en effet constaté que lorsque les valeurs de consigne des paramètres de régulation déterminées par le système de régulation 2 varient brusquement, l'erreur ε s'approche très près des seuils définis à partir de l'incertitude σ, comme illustré à la **figure 6** pour la pression PSPO en sortie de la turbopompe à oxygène avec un seuil S1=3σ. Le risque associé à ce comportement en transitoire est qu'une alerte (franchissement de seuil) soit remontée de façon erronée par le dispositif de surveillance 11 à l'entité 18 de gestion des alertes et de la séquence de tir.

Pour prendre en compte de ce phénomène, au cours de l'étape de comparaison, non seulement le dispositif de surveillance 11 utilise des seuils déterminés à partir de l'incertitude σ et du point de fonctionnement PF du moteur, mais il tient également compte de la dynamique de changement du point de fonctionnement du moteur, et plus précisément des valeurs de consigne du ou des paramètres de régulation. Cette prise en compte se traduit par la définition d'un gabarit de surveillance plus large autour de la mesure du paramètre surveillé en cas de transitions brusques (i.e. rapides) du point de fonctionnement du moteur, et au contraire plus étroit lors de transitions douces du point de fonctionnement (i.e. pas ou peu de changement de ce dernier).

Dans le second mode de réalisation décrit ici, ce gabarit est défini par :

- une borne supérieure obtenue en multipliant l'estimation du paramètre surveillé par la réponse indicielle d'un filtre d'ordre 2 prédéfini modélisant les variations brusques de la valeur de consigne ou de la valeur de consigne filtrée du ou des paramètres de régulation, et en ajoutant au résultat de cette opération l'incertitude σ précédemment déterminée (ou un multiple de cette incertitude selon le seuil considéré) ; et par

- une borne inférieure obtenue en multipliant l'estimation du paramètre surveillé par la réponse indicielle d'un filtre d'ordre 1 prédéfini modélisant les variations douces de la valeur de consigne ou de la valeur de consigne filtrée du ou des paramètres de régulation, et en retranchant au résultat de cette opération l'incertitude σ précédemment déterminée (ou un multiple de cette incertitude selon le seuil considéré).

L'échelon considéré pour évaluer les réponses indicielles des filtres d'ordre 1 et 2 est défini par la valeur de consigne brute yC du ou des paramètres de régulation.

En variante, le dispositif de surveillance 11 considère l'échelon défini par la valeur de consigne filtrée yCf du ou des paramètres de régulation.

Le choix des fréquences de coupure et des retards des filtres d'ordre 1 et 2 est réalisé hors ligne pour un paramètre surveillé et un moteur de fusée donnés, par exemple de façon expérimentale, par calculs ou par tests, à partir de la connaissance de la dynamique du paramètre surveillé en fonction du temps et des variations des valeurs de consigne des paramètres de régulation.

En variante des filtres d'ordres différents (d'ordres supérieurs notamment) peuvent être envisagés.

Ainsi, dans ce second mode de réalisation, le dispositif de surveillance 11 compare :

- à un premier seuil dit haut défini à partir de l'incertitude σ (ex. S1haut=+3σ), l'erreur entre la mesure m' du paramètre surveillé et son estimation p_est pondérée (i.e. multipliée) par la réponse du filtre d'ordre 2 à un échelon représentatif de la valeur de consigne yC (ou de la valeur de consigne filtrée yCf) ; et

- à un second seuil dit bas défini à partir de l'incertitude σ (ex. S1bas=-3σ), l'erreur entre la mesure m' du paramètre surveillé et son estimation p_est pondérée par la réponse du filtre d'ordre 1 prédéfini audit échelon.

La **figure 7** représente, à titre illustratif, le gabarit de surveillance élaboré dans ce second mode de réalisation autour de la mesure m'du paramètre surveillé p.

La dynamique de la mesure du paramètre surveillé p en réponse à un échelon f0 reflétant la valeur de consigne brute appliquée aux paramètres de régulation est représentée par la courbe f1. Par dynamique, on entend ici les variations de son amplitude en fonction du temps.

La courbe f2 représente l'estimation du paramètre surveillé p_est pondérée par la sortie du filtre d'ordre 1. De façon similaire, la courbe f3 représente l'estimation du paramètre surveillé p_est pondérée par la sortie du filtre d'ordre 2.

Les bornes inférieures Binf et supérieures Bsup sont obtenues respectivement en retranchant et en ajoutant l'incertitude σ aux courbes f2 et f3. Ces bornes Binf et Bsup définissent un gabarit de surveillance de la mesure m' du paramètre surveillé p, le franchissement d'une de ces bornes par le paramètre surveillé déclenchant conformément à l'invention l'émission d'une notification par le dispositif de surveillance 11 à destination de l'entité 18 de gestion des alertes et de la séquence de tir.

Il convient de noter que ces bornes Binf et Bsup sont amenées à évoluer en fonction du temps, puisqu'elles varient en fonction des valeurs de consignes des paramètres de régulation, autrement dit du point de fonctionnement du moteur.

## Revendications

1. Procédé de surveillance d'un paramètre d'un moteur de fusée (1) comprenant :

   - une étape d'obtention (E10) d'une mesure (m') du paramètre surveillé réalisée par un capteur (13) et correspondant à un point de fonctionnement du moteur, ce point de fonctionnement étant défini par au moins un paramètre de régulation du moteur ;
   - une étape d'estimation (E20) d'une valeur du paramètre surveillé pour ce point de fonctionnement, à partir d'une valeur régulée (yR) ou d'une valeur de consigne filtrée (yCf) dudit au moins un paramètre de régulation du moteur définissant le point de fonctionnement ;

   - une étape de comparaison (E40) d'une erreur entre la mesure du paramètre surveillé et son estimation par rapport à au moins un seuil déterminé (S1,S2) à partir d'une incertitude sur cette erreur évaluée pour le point de fonctionnement ; et
   - une étape d'émission (E60) d'une notification en cas de franchissement dudit au moins un seuil.

2. Procédé selon la revendication 1 dans lequel l'étape d'estimation (E20) de la valeur du paramètre surveillé est réalisée à l'aide d'un réseau de neurones artificiel (RNA) ayant comme entrée la valeur régulée ou la valeur de consigne filtrée dudit au moins un paramètre de régulation du moteur.

3. Procédé selon la revendication 1 ou 2 dans lequel, au cours de l'étape de comparaison, le point de fonctionnement utilisé pour évaluer l'incertitude sur l'erreur est déterminé à partir:

   - de la valeur régulée (yR) dudit au moins un paramètre de régulation ; ou
   - de la valeur de consigne filtrée (yCf) dudit au moins un paramètre de régulation ; ou
   - de la valeur de consigne (yC) dudit au moins un paramètre de régulation.

4. Procédé selon l'une quelconque des revendications 1 à 3 dans lequel le point de fonctionnement est défini par au moins l'un des paramètres de régulation suivant :

   - une pression d'une chambre de combustion du moteur ;
   - un rapport de mélange en entrée d'une pompe du moteur.

5. Procédé selon l'une quelconque des revendications 1 à 4 dans lequel au cours de l'étape de comparaison, on tient compte en outre d'une dynamique de changement du point de fonctionnement du moteur.

6. Procédé selon la revendication 5 dans lequel, au cours de l'étape de comparaison, on compare :

   - à un premier seuil dit haut, l'erreur entre la mesure du paramètre surveillé et son estimation pondérée par la réponse d'un filtre d'ordre 2 prédéfini à un échelon représentatif de la valeur de consigne ou de la valeur de consigne filtrée dudit au moins un paramètre de régulation ; et
   - à un second seuil dit bas, l'erreur entre la mesure du paramètre surveillé et son estimation pondérée par la réponse d'un filtre d'ordre 1 prédéfini audit échelon.

**7.** Procédé selon l'une quelconque des revendications 1 à 6 dans lequel le paramètre surveillé est un paramètre parmi :

- une pression du moteur ;
- une température du moteur ;
- une vitesse de rotation d'un élément du moteur ;
- un débit d'un fluide circulant dans le moteur ;
- un comportement vibratoire du moteur.

**8.** Procédé selon l'une quelconque des revendications 1 à 7 dans lequel l'incertitude sur l'erreur tient compte d'au moins une incertitude parmi une incertitude d'estimation du paramètre surveillé et une incertitude de mesure du paramètre surveillé.

**9.** Procédé selon la revendication 2 dans lequel l'incertitude sur l'erreur tient compte d'une incertitude d'estimation du paramètre surveillé déterminée en fonction :

- d'une incertitude sur l'entrée du réseau de neurones artificiel ;
- d'une incertitude sur le réseau de neurones ;
- d'une incertitude sur une base d'apprentissage utilisée pour construire le réseau de neurones.

**10.** Programme d'ordinateur comportant des instructions pour l'exécution des étapes du procédé de surveillance selon l'une quelconque des revendications 1 à 9 lorsque ledit programme est exécuté par un ordinateur monté dans un moteur de fusée.

**11.** Support d'enregistrement lisible par un ordinateur sur lequel est enregistré un programme d'ordinateur comprenant des instructions pour l'exécution des étapes du procédé de surveillance selon l'une quelconque des revendications 1 à 9.

**12.** Dispositif de surveillance (11) d'un paramètre d'un moteur de fusée comprenant :

- un module d'obtention (14) d'une mesure du paramètre surveillé réalisée par un capteur (13) et correspondant à un point de fonctionnement du moteur, ce point de fonctionnement étant défini par au moins un paramètre de régulation du moteur ;
- un module d'estimation (15) d'une valeur du paramètre surveillé pour ce point de fonctionnement, à partir d'une valeur régulée (yR) ou d'une valeur de consigne filtrée (yCf) dudit au moins un paramètre de régulation du moteur définissant le point de fonctionnement ;
- un module de comparaison (16) d'une erreur entre la mesure du paramètre surveillé et son estimation par rapport à au moins un seuil déterminé à partir d'une incertitude sur cette erreur évaluée pour le point de fonctionnement ; et
- un module d'émission (17) d'une notification en cas de franchissement dudit au moins un seuil.

**13.** Moteur de fusée (1) comprenant un dispositif selon la revendication 12.

**Patentansprüche**

**1.** Verfahren zum Überwachen eines Parameters eines Raketentriebwerks (1), umfassend :

- einen Schritt des Erhaltens (E10) einer Messung (m') des überwachten Parameters, die durch einen Sensor (13) durchgeführt wird und einem Betriebspunkt des Triebwerks entspricht, wobei dieser Betriebspunkt durch wenigstens einen Regelungsparameter des Triebwerks definiert ist,
- einen Schritt des Schätzens (E20) eines Wertes des für diesen Betriebspunkt überwachten Parameters anhand eines geregelten Wertes (yR) oder eines gefilterten Sollwertes (yCf) des wenigstens einen den Betriebspunkt definierenden Regelungsparameters des Triebwerks,
- einen Schritt des Vergleichens (E40) eines Fehlers zwischen der Messung des überwachten Parameters und ihrer Schätzung in Bezug auf wenigstens einen bestimmten Schwellwert (S1, S2) anhand einer für den Betriebspunkt ausgewerteten Unsicherheit bezüglich dieses Fehlers, und
- einen Schritt des Sendens (E60) einer Benachrichtigung im Falle eines Überschreitens des wenigstens einen Schwellwertes.

**2.** Verfahren nach Anspruch 1, bei dem der Schritt des Schätzens (E20) des Wertes des überwachten Parameters mit Hilfe eines künstlichen neuronalen Netzes (RNA) durchgeführt wird, das als Eingabe den geregelten Wert oder den gefilterten Sollwert des wenigstens einen Regelungsparameters des Triebwerks aufweist.

**3.** Verfahren nach Anspruch 1 oder 2, bei dem im Laufe des Vergleichsschrittes der Betriebspunkt, der zum Bewerten der Fehlerunsicherheit verwendet wird, bestimmt wird anhand :

- des geregelten Wertes (yR) des wenigstens einen Regelungsparameters, oder
- des gefilterten Sollwertes (yCf) des wenigstens einen Regelungsparameters, oder
- des Sollwertes (yC) des wenigstens einen Regelungsparameters.

**4.** Verfahren nach einem der Ansprüche 1 bis 3, bei dem der Betriebspunkt durch wenigstens einen der folgenden Regelungsparameter definiert ist:

- einen Druck einer Brennkammer des Triebwerks,
- ein Mischungsverhältnis am Einlass einer Pumpe des Triebwerks.

**5.** Verfahren nach einem der Ansprüche 1 bis 4, bei dem im Laufe des Vergleichsschrittes ferner eine Änderungsdynamik des Betriebspunktes des Triebwerks berücksichtigt wird.

**6.** Verfahren nach Anspruch 5, bei dem im Laufe des Vergleichsschrittes:

- der Fehler zwischen der Messung des überwachten Parameters und ihrer Schätzung, gewichtet durch die Reaktion eines vordefinierten Filters 2. Ordnung auf eine Stufe, die für den Sollwert oder den gefilterten Sollwert des wenigstens einen Regelungsparameters repräsentativ ist, mit einem ersten, sogenannten oberen Schwellwert verglichen wird, und
- der Fehler zwischen der Messung des überwachten Parameters und ihrer Schätzung, gewichtet durch die Reaktion eines vordefinierten Filters 1. Ordnung auf die Stufe, mit einem zweiten, sogenannten unteren Schwellwert verglichen wird.

**7.** Verfahren nach einem der Ansprüche 1 bis 6, bei dem der überwachte Parameter ein Parameter ist aus:

- einem Druck des Triebwerks,
- einer Temperatur des Triebwerks,
- einer Drehzahl eines Elements des Triebwerks,
- einer Strömungsrate eines Fluids, das in dem Triebwerk zirkuliert,
- einem Vibrationsverhalten des Triebwerks.

**8.** Verfahren nach einem der Ansprüche 1 bis 7, bei dem die Fehlerunsicherheit wenigstens eine Unsicherheit aus einer Schätzunsicherheit des überwachten Parameters und einer Messunsicherheit des überwachten Parameters berücksichtigt.

**9.** Verfahren nach Anspruch 2, bei dem die Fehlerunsicherheit eine Schätzunsicherheit des überwachten Parameters berücksichtigt, die bestimmt wird in Abhängigkeit von:

- einer Unsicherheit bezüglich der Eingabe des künstlichen neuronalen Netzes,
- einer Unsicherheit bezügliches des neuronalen Netzes,
- einer Unsicherheit bezüglich einer Lernbasis, die zum Aufbau des neuronalen Netzes verwendet wird.

**10.** Computerprogramm, umfassend Befehle für die Durchführung der Schritte des Überwachungsverfahrens nach einem der Ansprüche 1 bis 9, wenn das Programm durch einen in einem Raketentriebwerk angebrachten Computer ausgeführt wird.

**11.** Durch einen Computer lesbarer Aufzeichnungsträger, auf dem ein Computerprogramm gespeichert ist, das Befehle für die Durchführung der Schritte des Überwachungsverfahrens nach einem der Ansprüche 1 bis 9 umfasst.

**12.** Vorrichtung zum Überwachen (11) eines Parameters eines Raketentriebwerks, umfassend:

- ein Modul zum Erhalten (14) einer Messung des überwachten Parameters, die durch einen Sensor (13) durchgeführt wird und einem Betriebspunkt des Triebwerks entspricht, wobei dieser Betriebspunkt durch wenigstens einen Regelungsparameter des Triebwerks definiert ist,
- ein Modul zum Schätzen (15) eines Wertes des für diesen Betriebspunkt überwachten Parameters anhand eines geregelten Wertes (yR) oder eines gefilterten Sollwertes (yCf) des wenigstens einen den Betriebspunkt definierenden Regelungsparameters des Triebwerks,
- ein Modul zum Vergleichen (16) eines Fehlers zwischen der Messung des überwachten Parameters und ihrer Schätzung in Bezug auf wenigstens einen bestimmten Schwellwert anhand einer für den Betriebspunkt ausgewerteten Unsicherheit bezüglich dieses Fehlers, und
- ein Modul zum Senden (17) einer Benachrichtigung im Falle eines Überschreitens des wenigstens einen Schwellwertes.

**13.** Raketentriebwerk (1), das eine Vorrichtung nach Anspruch 12 umfasst.

**Claims**

**1.** A method of monitoring a parameter of a rocket engine (1), the method comprising:

- an obtaining step (E10) for obtaining a measurement (m') of the monitored parameter as measured by a sensor (13) and corresponding to an operating point of the engine, the operating point being defined by at least one regulation parameter of the engine;

- an estimation step (E20) for estimating a value of the monitored parameter for this operating point on the basis of a regulated value (yR) or of a filtered setpoint value (yCf) of said at least one regulation parameter of the engine defining the operating point;
- a comparison step (E40) for comparing an error between the measurement of the monitored parameter and its estimate relative to at least one threshold (S1, S2) determined on the basis of an uncertainty on the error evaluated for the operating point; and
- a notification step (E60) for sending a notification in the event of said at least one threshold being crossed.

2. A method according to claim 1, wherein the estimation step (E20) for estimating the value of the monitored parameter is performed using an artificial neural network (ANN) having as its input the regulated value or the filtered setpoint value for said at least one regulation parameter of the engine.

3. A method according to claim 1 or claim 2, wherein during the comparison step, the operating point used for evaluating the uncertainty on the error is determined from:

   - the regulated value (yR) of said at least one regulation parameter; or
   - the filtered setpoint value (yCf) of said at least one regulation parameter; or
   - the setpoint value (yC) of said at least one regulation parameter.

4. A method according to any one of claims 1 to 3, wherein the operating point is defined by at least one of the following regulation parameters:

   - a pressure of a combustion chamber of the engine; and
   - a mixture ratio at the inlet of a pump of the engine.

5. A method according to any one of claims 1 to 4, wherein during the comparison step, account is also taken of the rate of change of the operating point of the engine.

6. A method according to claim 5, wherein during the comparison step:

   - the error between the measurement of the monitored parameter and its estimate weighted by the response of a predefined second order filter at a step representative of the setpoint value or of the filtered setpoint value of said at least one regulation parameter is compared with a "high" first threshold; and
- the error between the measurement of the monitored parameter and its estimate weighted by the response of a predefined first order filter at said step is compared with a "low" second threshold.

7. A method according to any one of claims 1 to 6, wherein the monitored parameter is a parameter selected from:

   - a pressure of the engine;
   - a temperature of the engine;
   - a speed of rotation of an element of the engine;
   - a flow rate of a fluid flowing in the engine; and
   - a vibratory behavior of the engine.

8. A method according to any one of claims 1 to 7, wherein the uncertainty on the error takes account at least of an uncertainty selected from an uncertainty in estimating the monitored parameter and an uncertainty in measuring the monitored parameter.

9. A method according to claim 2, wherein the uncertainty on the error takes account of an uncertainty in estimating the monitored parameter, which uncertainty is determined as a function:

   - of an uncertainty on the input of the artificial neural network;
   - of an uncertainty on the neural network;
   - of an uncertainty on the training database used for constructing the neural network.

10. A computer program including instructions for executing steps of the monitoring method according to any one of claims 1 to 9 when said program is executed by a computer mounted in a rocket engine.

11. A computer readable data medium storing a computer program including instructions for executing steps of the monitoring method according to any one of claims 1 to 9.

12. A device (11) for monitoring a parameter of a rocket engine, the device comprising:

   - an obtaining module (14) for obtaining a measurement of the monitored parameter as measured by a sensor (13) and corresponding to an operating point of the engine, the operating point being defined by at least one regulation parameter of the engine;
   - an estimator module (15) for estimating a value of the monitored parameter for this operating point on the basis of a regulated value (yR) or of a filtered setpoint value (yCf) of said at least one regulation parameter of the engine defining the operating point;

- a comparator module (16) for comparing an error between the measurement of the monitored parameter and its estimate relative to at least one threshold that is determined on the basis of an uncertainty on the error evaluated for the operating point; and

- a notification module (17) for sending a notification in the event of said at least one threshold being crossed.

13. A rocket engine (1) including a device according to claim 12.

**FIG.1**

```
┌─────────────────────────────────┐
│  ┌──────┐  ┌──────┐  ┌──────┐   │
│  │ 11A  │  │ 11B  │  │ 11C  │   │
│  └──┬───┘  └──┬───┘  └──────┘   │
│     │         │                 │
│  ┌──┴───┐  ┌──┴───┐             │
│  │ 11D  │  │ 11E  │             │
│  └──────┘  └──────┘             │
│                              ∿11│
└─────────────────────────────────┘
```

# FIG.2

**E10**
Obtention et traitement d'une mesure m du paramêtre p pour le point de fonctionnement PF du moteur 1

**E20**
Estimation de la valeur du paramêtre p pour le point de fonctionnement PF du moteur

m'    **E30**    p-est

Calcul de l'erreur $\varepsilon$ entre la mesure m' et l'estimation p-est

**E70**
Nouveau point de fonctionnement du moteur

**E40**
Comparaison de l'erreur $\varepsilon$ par rapport à des seuils S1 et S2 déterminés en fonction du point de fonctionnement PF du moteur

**E50**
non    Détection d'un dépassement d'un seuil ?

oui

**E60**
Emission d'une notification de dépassement du seuil vers l'entité de gestion des alertes et de la séquence de tir

# FIG.3

FIG.4

| RM\PGC | 40-41 | 41-42 | 42-43 | 43-44 | 44-45 | 45-46 | 46-47 | 47-48 | 48-49 | 49-50 | 50-51 | 51-52 | 51-53 |
|---|---|---|---|---|---|---|---|---|---|---|---|---|---|
| 4,8-4,9 | 463 | 462 | 461 | 461 | 460 | 460 | 459 | 459 | 459 | 459 | 459 | 460 | 460 |
| 4,9-5 | 460 | 460 | 460 | 459 | 459 | 459 | 459 | 458 | 458 | 458 | 458 | 458 | 458 |
| 5-5,1 | 458 | 458 | 458 | 458 | 458 | 458 | 458 | 457 | 457 | 457 | 457 | 457 | 457 |
| 5,1-5,2 | 457 | 458 | 458 | 458 | 458 | 458 | 457 | 457 | 457 | 457 | 457 | 457 | 457 |
| 5,2-5,3 | 455 | 457 | 457 | 456 | 456 | 456 | 456 | 456 | 455 | 455 | 455 | 455 | 455 |
| 5,3-5,4 | 453 | 454 | 455 | 455 | 455 | 455 | 454 | 454 | 454 | 454 | 454 | 454 | 453 |
| 5,4-5,5 | 452 | 452 | 452 | 452 | 452 | 452 | 451 | 451 | 451 | 451 | 451 | 451 | 451 |
| 5,5-5,6 | 451 | 451 | 450 | 450 | 450 | 450 | 450 | 450 | 450 | 450 | 450 | 449 | 449 |
| 5,6-5,7 | 449 | 449 | 449 | 449 | 449 | 449 | 449 | 449 | 449 | 448 | 448 | 448 | 448 |
| 5,7-5,8 | 448 | 448 | 448 | 448 | 448 | 448 | 448 | 447 | 447 | 447 | 447 | 447 | 447 |
| 5,8-5,9 | 447 | 447 | 447 | 447 | 447 | 447 | 446 | 446 | 446 | 446 | 446 | 446 | 446 |
| 5,9-6 | 446 | 446 | 446 | 446 | 446 | 445 | 445 | 445 | 445 | 445 | 445 | 445 | 445 |
| 6-6,1 | 445 | 445 | 445 | 445 | 445 | 444 | 444 | 444 | 444 | 444 | 444 | 444 | 444 |
| 6,1-6,2 | 444 | 444 | 444 | 444 | 443 | 443 | 443 | 443 | 443 | 443 | 443 | 443 | 443 |
| 6,2-6,3 | 443 | 443 | 443 | 443 | 442 | 442 | 442 | 442 | 442 | 442 | 442 | 442 | 442 |

FIG.5

**FIG6**

**FIG.7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2965305
- US 20050222747 A1